# EUROPÄISCHE PATENTANMELDUNG

(11) **EP 1 441 180 A1**
(43) Veröffentlichungstag der Anmeldung: **28.07.2004**
(21) Anmeldenummer: 03001727.1
(22) Anmeldetag: 27.01.2003
(51) Int. Cl.: F23R 3/00, F23M 5/02, F02K 1/82

(54) **Hitzeschildelement, Brennkammer sowie Gasturbine**

(71) Anmelder: SIEMENS AKTIENGESELLSCHAFT, 80333 München (DE)
(72) Erfinder: Glessner, John Carl, Oviedo, FL 32765 (US); Huth, Michael, Dr., 45239 Essen (DE); Tiemann, Peter, 58452 Witten (DE)

(57) **Zusammenfassung**

Die Erfindung betrifft ein Hitzeschildelement (26), das eine Längsachse (43) und eine Querachse (45) aufweist. Das Hitzeschildelement (26) besteht aus einer Wand (47) mit einer Heißseite (35), die eine mit einem heißen Medium (M) beaufschlagbare Heißseitenoberfläche (55) aufweist und aus einer der Heißseite (35) gegenüberliegende Kaltseite. Die Wand (47) hat einen ersten Wandabschnitt (47A) und einen entlang der Längsachse (43) an den ersten Wandabschnitt (47A) angrenzenden zweiten Wandabschnitt (47B). Zumindest im ersten Wandabschnitt (47A) weist die Heißseitenoberfläche (55) einen Oberflächenbereich (57A, 57B) mit entlang der Längsachse (43) und der Querachse (45) gekrümmter Oberflächenkontur auf. Hierdurch wird eine Formversteifung für das Hitzeschildelement (26) erreicht, die sich günstig auf dessen Schwingungsverhalten aufweist. Die Erfindung betrifft weiterhin eine Brennkammer (4), die mit derartigen Hitzeschildelementen ausgekleidet ist sowie eine Gasturbine (1) mit einer Brennkammer (4).

## Beschreibung

Die Erfindung betrifft ein Hitzeschildelement, insbesondere zum Schutz von Bauteilen in einer thermisch hochbelasteten Maschine, wie z.B. von Bauteilen einer Gasturbine. Die Erfindung betrifft weiterhin eine Brennkammer mit einer hitzebeständigen Brennkammerauskleidung sowie eine Gasturbine mit einer Brennkammer.

Bauteile in einer thermisch hochbelasteten Maschine werden beim regulären Betrieb dieser Maschine hohen Temperaturen ausgesetzt. In einer thermischen Maschine, insbesondere in einer Gasturbine, werden durch ein heißes Medium, z.B. durch ein Heißgas aus einem Verbrennungsprozess in einer Brennkammer, primär die das heiße Medium begrenzenden Oberflächen und die dazugehörigen Bauteile thermisch und thermomechanisch sehr stark belastet. Infolge von Wärmetransport durch diese begrenzenden Oberflächen, wie er beispielsweise in Form von Wärmeleitung oder Wärmestrahlung auftritt, sind darüber hinaus auch Bauteile, die nicht unmittelbar dem heißen Medium ausgesetzt sind, hohen thermischen Belastungen ausgesetzt. Somit erfüllen die dem heißen Medium ausgesetzte Bauteile zwei Funktionen: Den Einschluss des heißen Mediums und den Schutz anderer, möglicherweise weniger hitzebeständiger Bauteile oder Komponenten vor Überhitzung oder thermischer Zerstörung. Demzufolge ergeben sich hohe Anforderungen vor allem an Werkstoffeigenschaften sowie die konstruktive Ausgestaltung und Montage dieser thermisch hochbelasteten Bauteile. Darüber hinaus sind häufig noch Anforderungen an die Kühlbarkeit solcher Bauteile zu berücksichtigen.

Brennkammern sind Bestandteile von Gasturbinen, die in vielen Bereichen zum Antrieb von Generatoren oder von Arbeitsmaschinen eingesetzt werden. Dabei wird der Energieinhalt eines Brennstoffs zur Erzeugung einer Rotationsbewegung einer Turbinenwelle genutzt. Der Brennstoff wird dazu von Brennern in den ihnen nachgeschalteten Brennkammern verbrannt, wobei von einem Luftverdichter verdichtete Luft zugeführt wird. Durch die Verbrennung des Brennstoffs wird ein unter hohem Druck stehendes Arbeitsmedium mit einer hohen Temperatur erzeugt. Dieses Arbeitsmedium wird in eine den Brennkammern nachgeschaltete Turbineneinheit geführt, wo es sich arbeitsleistend entspannt.

Dabei kann jedem Brenner eine separate Brennkammer zugeordnet sein, wobei das aus den Brennkammern abströmende Arbeitsmedium vor oder in der Turbineneinheit zusammengeführt sein kann. Alternativ kann die Brennkammer aber auch in einer so genannten Ringbrennkammer-Bauweise ausgeführt sein, bei der eine Mehrzahl, insbesondere alle, der Brenner in eine gemeinsame, üblicherweise ringförmige Brennkammer münden.

Bei der Auslegung derartiger Gasturbinen ist zusätzlich zur erreichbaren Leistung üblicherweise ein besonders hoher Wirkungsgrad ein Auslegungsziel. Eine Erhöhung des Wirkungsgrades lässt sich dabei aus thermodynamischen Gründen grundsätzlich durch eine Erhöhung der Austrittstemperatur erreichen, mit der das Arbeitsmedium von der Brennkammer ab- und in die Turbineneinheit einströmt. Daher werden Temperaturen von etwa 1200 °C bis 1500 °C für derartige Gasturbinen angestrebt und auch erreicht.

Bei derartig hohen Temperaturen des Arbeitsmediums sind jedoch die diesem heißen Medium, z.B. ein Heißgas, ausgesetzten Komponenten und Bauteile besonders hohen thermischen Belastungen ausgesetzt. Um dennoch bei hoher Zuverlässigkeit eine vergleichsweise lange Lebensdauer der betroffenen Komponenten zu gewährleisten, ist üblicherweise eine Ausgestaltung mit besonders hitzebeständigen Materialien und eine Kühlung der betroffenen Komponenten, insbesondere der Brennkammer, nötig. Um thermische Verspannungen des Materials zu verhindern, welche die Lebensdauer der Komponenten begrenzt, wird in der Regel angestrebt, eine möglichst gleichmäßige Kühlung der Komponenten zu erreichen.

Die Brennkammerwand ist dazu in der Regel auf ihrer Innenseite, d.h. brennraumseitig, mit Hitzeschildelementen vollflächig ausgekleidet, so dass eine Brennkammerauskleidung gebildet ist, die den hohen Belastungen standhält und die die Brennkammerwand schützt. Die Hitzeschildelemente können auf ihrer dem heißen Medium ausgesetzten Heißseite mit besonders hitzebeständigen Schutzschichten versehen werden. Zusätzlich können die Hitzeschildelemente auf der der Heißseite gegenüberliegenden Kaltseite, die der Brennkammerwand zugewandt ist, mit einem Kühlmittel beaufschlagt und auf diese Weise gekühlt werden.

Neben den vorgenannten thermischen oder thermomechanischen Eigenschaften ist das Schwingungsverhalten der Hitzeschildelemente, insbesondere im Montagezustand nach Befestigung in einer Brennkammer, besonders zu beachten. In Verbrennungssystemen wie z.B. Gasturbinen, Flugtriebwerken, Raketenmotoren oder Heizungsanlagen kann es nämlich zu thermoakustisch induzierten Verbrennungsschwingungen kommen. Diese entstehen durch eine Wechselwirkung der Verbrennungsflamme und der damit verbundenen Wärmefreisetzung in den Brennraum mit akustische Druckschwankungen. Durch eine akustische Anregung kann die Lage der Flamme, die Flammenfrontfläche oder die Gemischzusammensetzung des Brennstoff-Luft-Gemisches schwanken, was wiederum zu Schwankungen der Wärmefreisetzung führt. Bei konstruktiver Phasenlage kann es zu einer positiven Rückkopplung und Verstärkung kommen. Eine sogenannte Verbrennungsschwingung kann zu erheblichen Lärmbelästigungen und zu Schädigungen durch Vibrationen, möglicherweise sogar zum Versagen eines oder mehrerer Hitzeschildelemente, führen.

Wesentlich beeinflusst werden diese thermoakustisch hervorgerufenen Instabilitäten durch die akustischen -Eigenschaften des Brennraumes und die am Brennraumeintritt und am Brennraumaustritt sowie an den Brennkammerwänden vorliegenden Randbedingungen.

Aufgabe der Erfindung ist es daher ein thermisch hochbelastbares und möglichst gut kühlbares Hitzeschildelement anzugeben. Dabei soll mit dem Hitzeschildelement zugleich auf einfache Weise eine flächige Auskleidung, insbesondere eine vollflächige Brennkammerauskleidung, realisierbar sein, die wenig anfällig gegenüber Verbrennungsschwingungen ist.

Diese Aufgabe wird erfindungsgemäß gelöst durch ein Hitzeschildelement, das eine Längsachse und eine Querachse aufweist, umfassend eine Wand mit einer Heißseite, die eine mit einem heißen Medium beaufschlagbare Heißseitenoberfläche aufweist, und mit einer der Heißseite gegenüberliegende Kaltseite, weiter umfassend einen ersten Wandabschnitt und einen entlang der Längsachse an den ersten Wandabschnitt angrenzenden zweiten Wandabschnitt wobei im ersten Wandabschnitt die Heißseitenoberfläche zumindest einen Oberflächenbereich mit entlang der Längsachse und der Querachse gekrümmter Oberflächenkontur aufweist.

Die Erfindung geht hierbei von der Erkenntnis aus, dass das Schwingungsverhalten des Hitzeschildelements durch eine gezielte geometrische Konturgebung der Heißseitenoberfläche günstig beeinflusst werden kann. Durch die Konturgebung in zumindest einem Oberflächenbereich des ersten Wandabschnitts ist nämlich eine Verbesserung der mechanischen Eigenschaften, insbesondere der Steifigkeit des Hitzeschildelements erreicht, wodurch die Eigenschwingungsmoden des Hitzeschildelements gegenüber der Anregungsfrequenz einer Verbrennungsschwingung verschoben wird. Die Erhöhung der Steifigkeit des Hitzeschildelements erfolgt durch Formversteifung und führt unmittelbar zu einer Erhöhung der Eigenmode gegenüber der maßgeblichen Anregungsfrequenz einer Verbrennungsschwingung. Aufgrund dieser Erhöhung der Steifigkeit durch geometrische Ausgestaltung der Heißseitenoberfläche bei der Erfindung ist das Hitzeschildelement den konventionellen planaren Hitzeschildelementen deutlich überlegen. Dabei ist eine zweidimensionale gekrümmte Oberflächenkontur, d.h. sowohl entlang der Längsachse als auch entlang der Querachse dem Oberflächenbereich aufgeprägt.

Von besonderem Vorteil erweist sich dabei die Tatsache, dass bei einer vorgegebenen einbaubedingten Dimension des Hitzeschildelements, z.B. dessen Abmessung entlang der Querachse, durch die gekrümmte Kontur bereits eine Erhöhung der Steifigkeit und damit die für eine Vibrationsanregung maßgeblichen Eigenmode deutlich erhöht wird. Festigkeitsberechnungen haben gezeigt, dass beispielsweise ein herkömmliches planares Hitzeschildelement eine typische Eigenfreqeunz bei 380 Hz aufweist, wohingegen durch die Konturgebung gemäß der Erfindung bei ansonsten gleichen Abmessungen eine Erhöhung der Eigenfrequenz auf 440 Hz erreicht werden konnte. Bekannte Hitzeschildelemente könnten somit also möglicherweise noch nachträglich ertüchtigt werden, in dem man ihnen eine zweidimensionale gekrümmte Oberflächenkontur aufprägt. Das Schwingungsverhalten einer Brennkammer, die diese Hitzeschildelemente als Brennkammerauskleidung aufweist kann mithin durch die Ertüchtigung einzelner Hitzeschildelemente durch die versteifende Wirkung der gekrümmten Oberflächenkontur verbessert werden.

Es ist andererseits vorteilhafterweise auch möglich, bei der Auslegung einer Neuanlage, beispielsweise einer Brennkammer, eine minimale Eigenfrequenz vorzugeben, die von einem Hitzeschildelement nicht unterschritten werden soll. Dann können die Abmessungen des Hitzeschildelementes der Erfindung gegenüber entsprechenden Hitzeschildelementen ohne die zweidimensionale Konturgebung vergrößert werden ohne die Eigenmode nennenswert zu verändern. Damit steht für die konstruktive Auslegung einer Brennkammer für die Dimensionierung der Hitzeschildelemente ein größerer Bereich zur Verfügung. Vor allem genügt bei einer Brennkammerauskleidung aufgrund der größeren im Hinblick auf Schwingungsanregung tolerierbaren Abmessungen eine deutlich verringerte Anzahl von Hitzeschildelementen, um eine vollflächige Auskleidung zu erreichen. Somit ist ein Vorteil in der Teilezahl und damit ein Kostenvorteil erreicht.

Die mechanisch-funktionelle Aufteilung der Wand des Hitzeschildelements in einen ersten und in einen zweiten Wandabschnitt entlang der Längsachse ermöglicht es, je nach Einbausituation und Betriebsbedingungen des Hitzeschildsteins, den die Lage des Oberflächenbereich mit gekrümmter Oberflächenkontur anzupassen, und damit das Schwingungsverhalten entsprechend einzustellen. So kann beispielsweise der erste Wandabschnitt im Montagezustand in eine Brennkammer, etwa eine Ringbrennkammer einer Gasturbine, dem Brennraumeintritt und damit dem Brenner zugewandt sein, während der zweite Wandabschnitt an den Brennraumaustritt angrenzt. Im Mündungsbereich von Brennraumeintritt und Brennraumaustritt ist der erste Wandabschnitt bzw. der zweite Wandabschnitt jeweils an die vorliegenden geometrischen Gegebenheiten von anpassbar, so dass ein Eintritt, Transfer und Austritt von heißen Verbrennungsgasen im Brennraum in einem möglichst gleichförmigen Heißgasstrom erreicht ist. Das durch Verbrennung erzeugte heiße Medium, insbesondere das Heißgas strömt dabei entlang der Längsachse des Hitzeschildelements und beaufschlagt dessen Heißseitenoberfläche.

Durch die Konturgebung in einem Oberflächenbereich des ersten Wandabschnitts wird vorteilhafterweise die Strömung des heißen Mediums durch einen den Hitzeschildelement aufweisenden Brennraum günstig beeinflusst und so eingestellt, so dass nachfolgend entlang des zweiten Wandabschnitts eine günstigere Ausströmung aus dem Brennraum erreicht ist. Die Heißseitenoberfläche kann dabei im zweiten Wandabschnitt sowohl konventionell, d.h. lokal planar, oder aber falls für das Schwingungsverhalten oder die Strömungsleitfunktion günstig ebenfalls einen Oberflächenbereich mit gekrümmter Oberflächenkontur aufweisen. Im zweiten Fall kann sich die gekrümmte Oberflächenkontur der Heißseitenoberfläche von dem ersten Wandbereich bis in den zweiten Wandbereich hinein kontinuierlich erstrecken.

In besonders bevorzugter Ausgestaltung ist der zweite Wandabschnitt gegenüber dem ersten Wandabschnitt in Richtung der Heißseite geneigt. Je nach Neigungswinkel können somit unterschiedliche Einbau- bzw. Betriebssituationen des Hitzeschildelements realisiert werden. Beispielsweise bei einer Ringbrennkammer einer Gasturbine, die mit einem sogenannten Brennkammerliner zur Begrenzung und zur Strömungsführung des Heißgases zu einer nachgeschalteten Turbine ausgestattet ist, kann das Hitzeschildelement als ein Segment das Gasturbinenliners eingesetzt werden. Mit einer Vielzahl solcher Hitzeschildelemente kann über den vollen Umfang der Ringbrennkammer eine vollständige flächige Auskleidung der Brennkammerwand der Ringbrennkammer durchgeführt werden. Bei derartigen Ringbrennkammern ist nämlich der Heißgasstrom vom Brenneraustritt in Richtung der Turbine um einen Winkel umzulenken. Zu diesem Umlenkzweck ist unter anderem der Brennkammerliner vorgesehen. Mit einem Brennkammerliner, der eines oder mehrere Hitzeschildelemente gemäß der Erfindung aufweist ist dies besonders einfach möglich. Daher ist das Hitzeschildelement der in besonderer Weise hierfür geeignet, da aufgrund des ersten und des demgegenüber geneigten zweiten Wandabschnitts der Umlenkwinkel auf die jeweiligen Gegebenheiten hin eingestellt werden kann, wobei eine besonders vorteilhafte Einströmung in die Turbine erreichbar ist.

In bevorzugter Ausgestaltung weist der Oberflächenbereich eine konvexe und/oder eine konkave Oberflächenkontur auf. Dabei kann auch lediglich lokal eine konvexe und/oder lokal eine konkave Oberflächenkontur im Oberflächenbereich vorliegen. Eine gekrümmte Oberflächenkontur die flächig, d.h. in zwei Dimensionen entlang der Längsachse und der Querachse betrachtet, konvex bzw. konkav ist, kann beispielsweise durch Oberflächenabschnitte von geometrischen Gebilden wie Kugel, Paraboloid, Ellipsoid, Hyperboloid oder aber ganz allgemein durch zweidimensionale Kurven der Differentialgeometrie etwa der form z = f(x,y)realisiert sein.

Bevorzugt ist ein Oberflächenbereich in Form einer Sattelfläche mit einem Sattelpunkt ausgestaltet. Eine Sattelfläche zeichnet sich bekanntlich dadurch aus, dass diese ausgehend vom Sattelpunkt entlang unterschiedlicher Richtungen auf der Sattelfläche Krümmungen mit entgegengesetztem Vorzeichen aufweist. Im Sattelpunkt selber ist die Krümmung lokal Null

Die Sattelfläche ist in bevorzugter Ausgestaltung in Richtung der Längsachse konvex und in Richtung der Querachse konkav gekrümmt.

Vorzugsweise ist entlang der Längsachse dem Oberflächenbereich ein zweiter Oberflächenbereich nachgeordnet, wobei der Oberflächenbereich über einen Übergangsbereich in den zweiten Oberflächenbereich übergeht. Der Übergang des Oberflächenbereichs und des zweiten Oberflächenbereichs erfolgt dabei vorteilhafterweise kontinuierlich, d.h. z.B. zumindest stetig oder aber stetig-differenzierbar. Auf diese Weise sind Oberflächenbereiche mit verscheiden gekrümmter Oberflächenkontur miteinander "glatt" verbindbar. Damit können sowohl im Hinblick auf die Strömungsleitfunktion des Hitzeschildelements für das heiße Medium als auch im Hinblick auf die mechanische Festigkeit gute Ergebnisse erzielt werden. Insbesondere können durch die Kombination von Oberflächenbereichen mit unterschiedlich gekrümmter Oberflächenkontur die mechanischen Eigenschaften verbessert und die versteifende Wirkung auf das so ausgestaltete Hitzeschildelement insgesamt erhöht werden.

Vorzugsweise weist der zweite Oberflächenbereich eine sphärische Oberflächenkontur auf. Diese ist zum Beispiel durch eine Kugelkappe realisierbar. Dabei kann die sphärische Oberflächenkontur bezogen auf die Heißseitenoberfläche nach außen aus der Wand heraus gewölbt, d.h. konvex, oder nach innen in die Wand hinein gewölbt, d.h. konkav sein.

Von besonderem Vorteil erweist sich eine Ausgestaltung bei der ein Oberflächenbereich in Form einer Sattelfläche mit einem zweiten Oberflächenbereich mit sphärischer Kontur kombiniert werden. Die Sattelfläche ist hierbei in Richtung der Längsachse konvex - d.h. aus der Wand heraus gewölbt - und in Richtung der Querachse konkav gekrümmt. Der sich über den Übergangsbereich in Längsrichtung anschließende zweite Oberflächenbereich ist sphärisch-konkav. Somit ergibt sich linear in Längsrichtung entlang der Heißseite des Hitzeschildsteins betrachtet im ersten Wandabschnitt eine S-Form der Heißseitenoberfläche. Strömungstechnisch und schwingungstechnisch erweist sich diese Konturgebung in den Oberflächenbereichen der Heißseitenoberfläche als besonders günstig. Im Hinblick auf den Montagezustand eines Hitzeschildelements in einer Brennkammer, z.B. einer Ringbrennkammer einer Gasturbine, wird überdies erreicht, dass im Betrieb die Flamme eines Brenners aufgrund der ausweichenden S-Form der Heißseitenoberfläche die Heißseitenoberfläche nicht mehr unmittelbar erreicht, vor allem im zweiten Oberflächenbereich mit sphärisch-konkaver Kontur. Dies ist vorteilhafterweise mit einem geringeren Wärmeeintrag in das Hitzeschildelement verbunden, so dass ein geringerer Kühlleistungsbedarf zu verzeichnen ist.

Vorzugsweise weist das Hitzeschildelement eine hitzebeständige Schutzschicht, insbesondere eine keramische Wärmedämmschicht, auf der Heißseite auf. Die dem Heißgas ausgesetzte Heißseitenoberfläche wird dabei vorteilhafterweise vollständig von einer Wärmedämmschicht gebildet, die durch einen Beschichtungsprozess, z.B. thermisches Spritzen oder Aufdampfen, auf das Grundmaterial des Hitzeschildelements aufgebracht wurde. Auf diese Weise ist das Hitzeschildelement beständig gegenüber den hohen Belastungen wie Sie in einer Brennkammer einer Gasturbine bei Beaufschlagung mit heißen Verbrennungsgasen vorkommen. Die Wärmedämmschicht verringert den Wärmetransport von der Heißseite zur Kaltseite des Hitzeschildelements, so dass die Brennkammerwand sich nicht so stark erwärmt und vor thermischer Beschädigung geschützt ist. Das Grundmaterial selbst besteht aus einer hochtemperaturfesten Legierung, z.B. aus einer hochtemperaturfesten Strahllegierung.

Um die durch das Hitzeschildelement im Betrieb von der Heißseite zu der Kaltseite transportierte Wärme anzuführen weist die Kaltseite vorzugsweise eine mit einem Kühlmittel beaufschlagbare Kühloberfläche auf. Dazu wird in der Regel ein auch als "Prallkühlung" bezeichnetes Kühlverfahren eingesetzt. Bei der Prallkühlung wird ein Kühlmittel, in der Regel Kühlluft, durch eine Vielzahl von Bohrungen in der Brennkammerwand den Hitzeschildelementen zugeführt, so dass das Kühlmittel im Wesentlichen senkrecht auf ihre der Brennkammerwand zugewandte auf der Kaltseite gebildete Kühloberfläche prallt. Das durch den Kühlprozess aufgeheizte Kühlmittel, z.B. Kühlluft, wird anschließend aus dem Innenraum, den die Brennkammerwand mit den Hitzeschildelementen bildet, abgeführt. Ein weiterer Kühlprozess, der bei der Längshinterströmung der Hitzeschildelemente entlang der Kühloberfläche ausgenutzt wird ist die sogenannte konvektive Kühlung. Die konvektive Kühlung wird durch Strukturierung der Kühloberfläche, z.B. durch Riefen, oder Rippen, verstärkt. Analog zu der Heißseitenoberfläche kann im ersten Wandabschnitt auch die Kühloberfläche zumindest einen Oberflächenbereich mit entlang der Längsachse und der Querachse gekrümmter Oberflächenkontur aufweist. Durch beispielsweise konvexe und/oder konkave Oberflächenbereiche auf der Kühloberfläche kann neben den Vorteilen für die genannten Kühlprozessen insbesondere auch eine versteifende Wirkung auf das Hitzeschildelement erreicht werden.

In besonders bevorzugter Ausgestaltung finden die Hitzeschildelemente Anwendung in einer Brennkammer. Eine solche Brennkammer ist zum Schutz der Brennkammerwand mit einer Brennkammerauskleidung versehen, die Hitzeschildelemente gemäß der Erfindung und ihren vorteilhaften Ausgestaltungen aufweist.

Eine solche Brennkammer mit Hitzeschildelementen ist vorzugsweise Bestandteil einer Gasturbine.

Gasturbinen finden neben der Anwendung zum Erzeugen einer Vorschubkraft, beispielsweise in Luftfahrzeugen, in der Kraftwerkstechnik verbreitete Anwendung. Ein Brennstoff/Luft-Gemisch wird gezündet und verbrennt in der Brennkammer. Dabei expandieren die entstehenden, heißen Verbrennungsgase in Richtung eines der Brennkammer nachgeschalteten Turbinenraumes, treffen dort auf eine Anordnung aus Leitschaufeln und Laufschaufeln und treiben die Laufschaufeln und somit den mit den Laufschaufeln verbundenen Rotor der Turbine an. Die so gewonnene mechanische Energie kann schließlich beispielsweise zur Stromerzeugung genutzt werden.

Bezüglich der Konstruktion der Turbinenbrennkammer gibt es zwei grundsätzlich verschiedene Ansätze. So sind neben den Ringbrennkammern (RBK) noch Brennkammeranordnungen mit mehreren Einzelbrennkammern, den so genannten Cans, bekannt. Bei der Ringbrennkammer wird von mindestens einem, üblicherweise mehreren Brennern, gezündetes Gasgemisch in eine ringförmige Brennkammer eingeleitet, in der es sich gleichmäßig verteilt und in einem ringförmigen Strom in Richtung der radial um eine Rotorwelle angeordneten Leit- und Laufschaufeln des Turbinenraumes strömt. Die bei der Verbrennung entstehenden, hohen Temperaturen wirken auf die Wandungen der Ringbrennkammer ein, so dass es zur Kühlung dieser Brennkammerwandungen besonderer Anforderungen bedarf.

Hierzu können verschiedene Kühlkonzepte zur Anwendung kommen, die bei dem Hitzeschildelement anwendbar sind. So unterscheidet man nach
- der Strömungsform: Konvektive, Prall- oder Filmkühlung
- dem Kühlmedium: Luft- oder Dampfkühlung
- der Verwendung des Kühlmediums nach Beendigung der Kühlaufgabe: z.B.
   ■ "Offene Kühlung mit Zumischung des Kühlmittels stromab der Verbrennung
   ■ "Geschlossene Kühlung" mit Rückführung des Kühlmediums in den Prozess (Verbrennung, Expansion)

Bei der gegenüber der offenen Luftkühlung sehr vorteilhaften geschlossenen Luftkühlung wird nach Abschluss der Kühlaufgabe die erwärmte Luft vollständig zur Verbrennung genutzt und die mitgeführte Wärme ebenfalls rückgeführt; die geschlossene Luftkühlung ermöglicht somit höhere Leistungen/Wirkungsgrade sowie niedrigere NOₓ-Emissionen als z.B. die offene Luftkühlung. Bei der offenen Luftkühlung wird die "kalte" Kühlluft dem Heizgasstrom stromab der Verbrennung zugemischt (niedrigere Gasturbinen-Effizienz, höhere Schadstoffwerte). Unabhängig von Konstruktionsprinzipien gilt, dass die geschlossene Luftkühlung der offenen deutlich überlegen ist.

Für einen temperaturbeständigen und schwingungsresistenten Aufbau einer Ringbrennkammer kann eine Brennkammerauskleidung mit einer Anzahl von temperaturfesten formversteiften Hitzeschildelementen versehen werden, so dass eine vollflächige Brennkammerauskleidung in dem Ringraum gebildet ist, ein sogenannter Brennkammerliner. Hierbei wird zwischen der Brennkammerauskleidung und dem eigentlichen Ringbrennkammergehäuse, d.h. der Brennkammerwand, ein Ringraum zur Durchleitung des Kühlmediums belassen, so dass vorteilhafterweise eine geschlossene Luftkühlung möglich ist.

Im folgenden wird die Erfindung anhand einer Zeichnung näher erläutert. Darin zeigen in vereinfachter und nicht maßstäblicher Darstellung
- FIG 1: einen Halbschnitt durch eine Gasturbine,
- FIG 2: einen Schnitt durch eine Brennkammer,
- FIG 3: in einer perspektivischen Darstellung ein Hitzeschildelement,
- FIG 4: eine Ansicht des in Figur 3 dargestellten Hitzeschildelements entlang dessen Längsachse auf die Stirnseite,
- FIG 5: einen Vertikalschnitt durch der oberen Halbschale einer Ringbrennkammer im Bereich der Eintrittsmündung,
- FIG 6: einen Vertikalschnitt durch die obere Halbschale einer Ringbrennkammer im Bereich der Eintrittsmündung mit gegenüber Figur 5 alternativer Ausgestaltung der Hitzeschildelemente.

Gleiche Teile sind in allen Figuren mit denselben Bezugszeichen versehen.

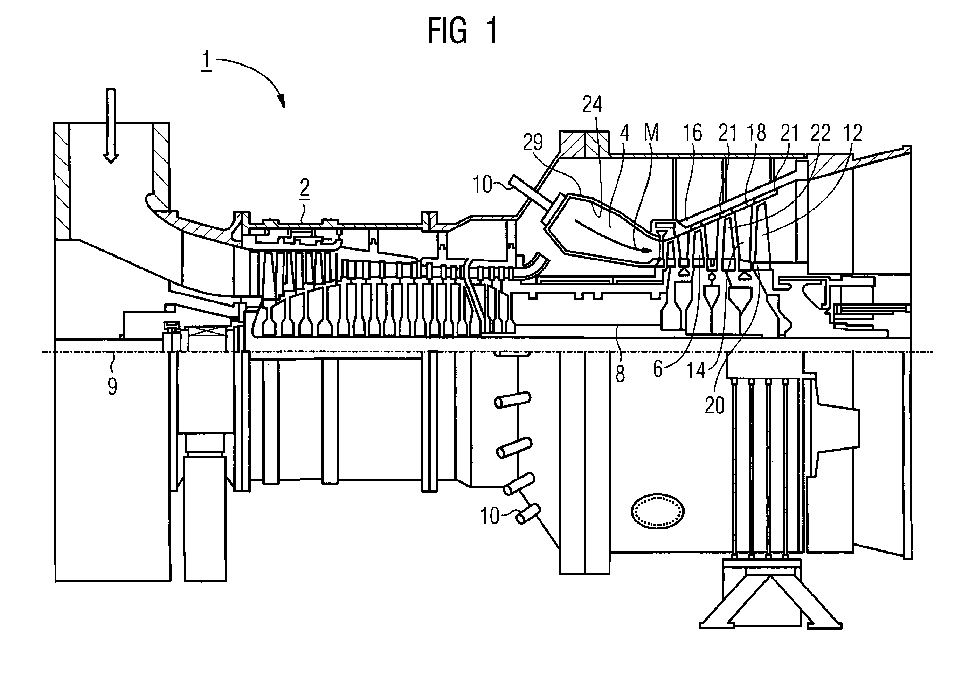

Die Gasturbine 1 gemäß Fig. 1 weist einen Verdichter 2 für Verbrennungsluft, eine Brennkammer 4 sowie eine Turbine 6 zum Antrieb des Verdichters 2 und eines nicht dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 drehbar gelagert ist. Die in der Art einer Ringbrennkammer ausgeführte Brennkammer 4 ist mit einer Anzahl von Brennern 10 zur Verbrennung eines flüssigen oder gasförmigen Brennstoffs bestückt.

Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbine 6 eine Anzahl von feststehenden Leitschaufeln 14, die ebenfalls kranzförmig unter der Bildung von Leitschaufelreihen an einem Innengehäuse 16 der Turbine 6 befestigt sind. Die Laufschaufeln 12 dienen dabei zum Antrieb der Turbinenwelle 8 durch Impulsübertrag vom die Turbine 6 durchströmenden heißen Medium, dem Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinanderfolgenden Laufschaufelreihen oder Laufschaufelkränzen. Ein aufeinanderfolgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist eine auch als Schaufelfuß bezeichnete Plattform 18 auf, die zur Fixierung der jeweiligen Leitschaufel 14 am Innengehäuse 16 der Turbine 6 als Wandelement angeordnet ist. Die Plattform 18 ist dabei ein thermisch vergleichsweise stark belastetes Bauteil, das die äußere Begrenzung eines Heizgaskanals für das die Turbine 6 durchströmende Arbeitsmedium M bildet. Jede Laufschaufel 12 ist in analoger Weise über eine auch als Schaufelfuß bezeichnete Plattform 20 an der Turbinenwelle 8 befestigt.

Zwischen den beabstandet voneinander angeordneten Plattformen 18 der Leitschaufeln 14 zweier benachbarter Leitschaufelreihen ist jeweils ein Führungsring 21 am Innengehäuse 16 der Turbine 6 angeordnet. Die äußere Oberfläche jedes Führungsrings 21 ist dabei ebenfalls dem heißen, die Turbine 6 durchströmenden Arbeitsmedium M ausgesetzt und in radialer Richtung vom äußeren Ende 22 der ihm gegenüber liegenden Laufschaufel 12 durch einen Spalt beabstandet. Die zwischen benachbarten Leitschaufelreihen angeordneten Führungsringe 21 dienen dabei insbesondere als Abdeckelemente, die die Innenwand 16 oder andere Gehäuse-Einbauteile vor einer thermischen Überbeanspruchung durch das die Turbine 6 durchströmende heiße Arbeitsmedium M schützt.

Die Brennkammer 4 ist von einem Brennkammergehäuse 29 begrenzt, wobei brennkammerseitig eine Brennkammerwand 24 gebildet ist. Im Ausführungsbeispiel ist die Brennkammer 4 als so genannte Ringbrennkammer ausgestaltet, bei der eine Vielzahl von in Umfangsrichtung um die Turbinenwelle 8 herum angeordneten Brennern 10 in einen gemeinsamen Brennkammerraum münden. Dazu ist die Brennkammer 4 in ihrer Gesamtheit als ringförmige Struktur ausgestaltet, die um die Turbinenwelle 8 herum positioniert ist.

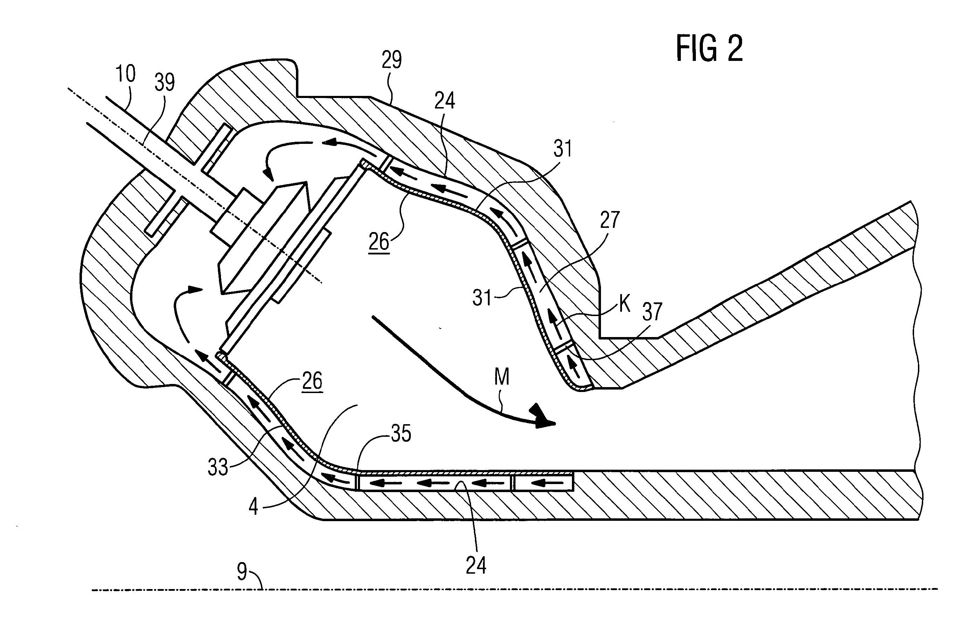

Zur weiteren Verdeutlichung der Ausführung der Brennkammerwand 24 ist in Fig. 2 die Brennkammer 4 im Schnitt dargestellt, die sich torusartig um die Turbinenwelle 8 herum fortsetzt. Wie in der Darstellung erkennbar ist, weist die Brennkammer 4 einen Anfangs- oder Einströmabschnitt auf, in den endseitig der Auslass des jeweils zugeordneten Brenners 10 mündet. In Strömungsrichtung des Arbeitsmediums M gesehen verengt sich sodann der Querschnitt der Brennkammer 4, wobei dem sich einstellenden Strömungsprofil des Arbeitsmediums M in diesem Raumbereich Rechnung getragen ist. Ausgangsseitig weist die Brennkammer 4 im Längsschnitt eine Krümmung auf, durch die das Abströmen des Arbeitsmediums M aus der Brennkammer 4 in einer für einen besonders hohen Impuls- und Energieübertrag auf die strömungsseitig gesehen nachfolgende erste Laufschaufelreihe begünstigt ist. Das Arbeitsmedium M wird beim Durchströmen der Brennkammer von einer Richtung im Wesentlichen parallel zur Brennerachse 39 in eine Richtung parallel zur Mittelachse 9 umgelenkt.

Zur Erzielung eines vergleichsweise hohen Wirkungsgrades ist die Brennkammer 4 für eine vergleichsweise hohe Temperatur des Arbeitsmediums M von etwa 1200 °C bis 1500 °C ausgelegt. Um auch bei diesen, für die Materialien ungünstigen Betriebsparametern eine vergleichsweise lange Betriebsdauer zu ermöglichen, ist die Brennkammerwand 24 auf ihrer dem Arbeitsmedium M zugewandten Seite mit einer aus Hitzeschildelementen 26 gebildeten Brennkammerauskleidung versehen. Die Hitzeschildelemente 26 sind über Befestigungsmittel 37 an der Brennkammerwand 24 unter Belassung eines Spalts befestigt. Jedes Hitzeschildelement 26 ist arbeitsmediumsseitig, das heißt auf dessen Heißseite 35, mit einer besonders hitzebeständigen Schutzschicht 31 ausgestattet. Aufgrund der hohen Temperaturen im Inneren der Brennkammer 4 ist zudem für die Hitzeschildelemente 26 ein Kühlsystem vorgesehen. Das Kühlsystem basiert dabei auf dem Prinzip der konvektiven Kühlung, bei dem Kühlmittel, z.B. Kühlluft, entlang einer Oberfläche des zu kühlenden Bauteils geführt wird. Alternativ kann das Kühlsystem für eine Prallkühlung ausgelegt sein, bei dem Kühlluft als Kühlmittel K unter ausreichend hohem Druck an einer Vielzahl von Stellen an das zu kühlende Bauteil senkrecht einer Bauteiloberfläche geblasen wird.

Das Kühlsystem ist bei einem einfachen Aufbau für eine zuverlässige, flächendeckende Beaufschlagung der Hitzeschildelemente 26 mit Kühlluft K und zudem für einen besonders geringen Kühlmitteldruckverlust ausgelegt. Dazu werden die Hitzeschildelemente 26 von ihrer Kaltseite 33 durch die Kühlluft K gekühlt, die einem zwischen dem Hitzeschildelement 26 und der Brennkammerwand 24 gebildeten Zwischenraum 27 durch geeignete - nicht näher dargestellte Zufuhrleitungen - zugestellt wird und je nach Kühlmechanismus auf bzw. entlang der Kaltseite 33 eines jeweiligen Hitzeschildelements 26 geleitet wird. Hierbei wird das Prinzip der sehr vorteilhaften geschlossenen Luftkühlung angewendet. Nach Abschluss der Kühlaufgabe an den Hitzeschildelementen 26 wird die erwärmte Luft vollständig zur Verbrennung im Brenner 10 genutzt und die mitgeführte Wärme ebenfalls rückgeführt; die geschlossene Luftkühlung ermöglicht somit höhere Leistungen/Wirkungsgrade sowie niedrigere NOₓ-Emissionen als z.B. die offene Luftkühlung. Bei der offenen Luftkühlung wird die "kalte" Kühlluft dem Heizgasstrom stromab der Verbrennung zugemischt, was zu einer niedrigeren Gasturbinen-Effizienz und höheren Schadstoffwerten führt.

Für einen sowohl temperaturbeständigen als auch schwingungsresistenten Aufbau der als Ringbrennkammer ausgestalteten Brennkammer 4 ist eine Brennkammerauskleidung mit einer Anzahl von temperaturfesten und gemäß der Erfindung formversteiften Hitzeschildelementen 26 vorgesehen. Auf diese Weise ist eine vollflächige weitgehend leckagefreie Brennkammerauskleidung in dem Ringraum gebildet, ein sogenannter Brennkammerliner.

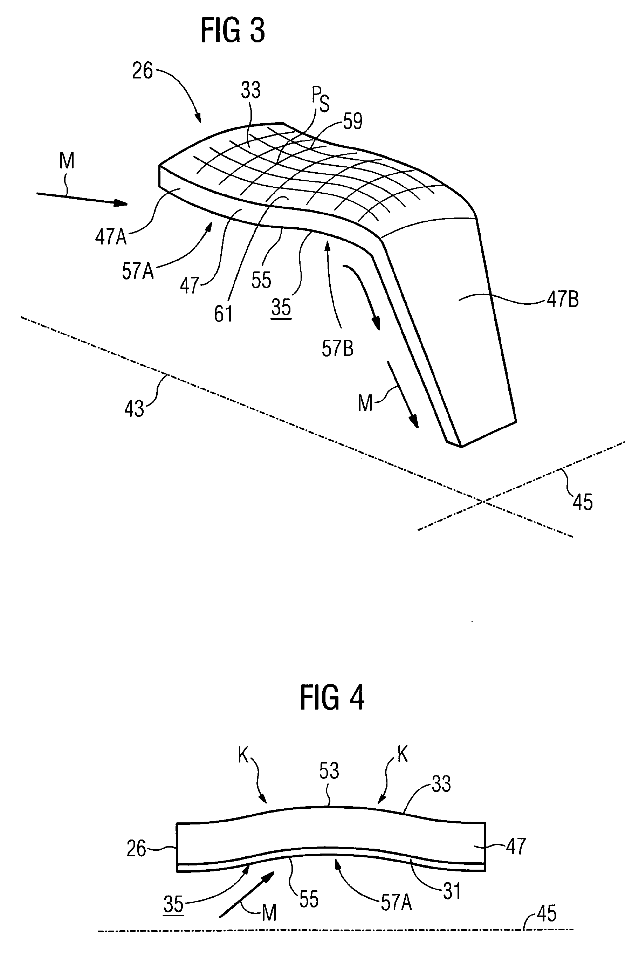

Das Schwingungsverhalten des Hitzeschildelements 26 ist hierbei durch eine gezielte geometrische Konturgebung günstig beeinflusst, so dass die Eigenschwingungsmoden des Hitzeschildelements 26 gegenüber der Anregungsfrequenz einer Verbrennungsschwingung erhöht ist. Resonanzeffekte durch positive Rückkopplung können somit vermieden werden. Zur Illustration zeigt Fig. 3 in vereinfachter perspektivischer Darstellung ein Ausführungsbeispiel eines Hitzeschildelements 26 sowie Fig. 4 eine etwas vergrößerte Ansicht der Stirnseitenfläche des in Figur 3 dargestellten Hitzeschildelements 26. Das Hitzeschildelement 26 erstreckt sich entlang einer Längsachse 43 und einer senkrecht zur Längsachse 43 verlaufenden Querachse 45. Das Hitzeschildelement 26 umfasst eine Wand 47, die eine Heißseite 35 mit einer von dem heißen Arbeitsmedium M beaufschlagbaren Heißseitenoberfläche 55 aufweist. Der Heißseite 35 der Wand 47 gegenüberliegend ist eine Kaltseite 33 vorgesehen. Die Wand 47 weist zwei Wandabschnitte 47A, 47B auf, wobei ein erster Wandabschnitt 47A einem zweiten Wandabschnitt 47B entlang der Längsachse 43 in Strömungsrichtung des Arbeitsmediums M vorgeordnet ist. Weiterhin ist der zweite Wandabschnitt 47B gegenüber dem ersten Wandabschnitt 47A in Richtung der Heißseite 35 geneigt, so dass der zweite Wandabschnitt 47B einen Neigungswinkel mit der Längsachse 43 bildet. Die Neigung ist dabei so eingestellt, dass eine konstruktive Anpassung zur Auskleidung einer Brennkammerwand 24 (vgl.Figur 2) erreicht ist. Auf der Heißseitenoberfläche 55 sind im ersten Wandabschnitt 47A Oberflächenbereiche 57A, 57B gebildet. Die Oberflächenbereiche 57A, 57B weisen jeweils entlang der Längsachse 43 und entlang der Querachse 45 eine nicht-planare, das heißt gekrümmte Oberflächenkontur auf. Der Oberflächenbereich 57A ist dabei in Richtung der Querachse 45 konkav gekrümmt und in Richtung der Längsachse 45 konvex gekrümmt, so dass im Oberflächenbereich 57A eine Sattelfläche 59 mit einem Sattelpunkt Pₛ gebildet ist. Der zweite Oberflächenbereich 57B weist eine sphärisch Oberflächenkontur auf und ist entlang der Längsachse 43 in Strömungsrichtung des Arbeitsmediums M, z.B. des heißen Verbrennungsgases, dem Oberflächenbereich 57A nachgeordnet, wobei der Oberflächenbereich 57A in den zweiten Oberflächenbereich 57B über einen Übergangsbereich 61 übergeht.

Durch die Formgebung durch Oberflächenkonturierung in den Oberflächenbereich 57A, 57B des ersten Wandabschnitts 47A ist eine Verbesserung der mechanischen Eigenschaften, insbesondere der Steifigkeit des Hitzeschildelements 26 erreicht. Dadurch werden die Eigenschwingungsmoden des Hitzeschildelements 26 gegenüber der Anregungsfrequenz einer Verbrennungsschwingung gezielt beeinflusst. Die Erhöhung der Steifigkeit des Hitzeschildelements 26 erfolgt durch Formversteifung und führt unmittelbar zu einer Erhöhung der Eigenmode gegenüber der maßgeblichen Anregungsfrequenz einer Verbrennungsschwingung. Aufgrund dieser Erhöhung der Steifigkeit durch geometrische Ausgestaltung der Heißseitenoberfläche bei der Erfindung ist das Hitzeschildelement 26 den konventionellen planaren Hitzeschildelementen deutlich überlegen. Dabei ist eine zweidimensionale gekrümmte Oberflächenkontur, d.h. sowohl entlang der Längsachse 43 als auch entlang der Querachse 45 dem Oberflächenbereich 57A, 57B aufgeprägt. Eine gekrümmte Oberflächenkontur kann dabei auch auf der Kaltseite 33 oder auf den Oberflächen im zweiten Wandabschnitt47B aufgeprägt sein, wo dies zu einer weiteren Verbesserung des Schwingungsverhaltens im Hinblick auf eine geringe Anfälligkeit gegenüber Resonanzanregung durch übliche Verbrennungsschwingungsfrequenzen führt. Es hat sich allerdings überraschenderweise gezeigt, dass bereits eine ausreichende Formversteifung durch eine zweidimensionale Oberflächenkonturierung der Heißseitenoberfläche 55 im ersten Wandabschnitt gute Ergebnisse liefert. So weist ein herkömmliches - im Wesentlichen planares - Hitzeschildelement eine typische Eigenfrequenz bei z.B. 380 Hz auf, wohingegen durch die Konturgebung gemäß der Erfindung bei ansonsten gleichen Abmessungen eine Erhöhung der Eigenfrequenz auf 440 Hz erreicht werden konnte. Bereits konkave und/oder konvexe Oberflächenkonturen mit nur geringen Krümmungsradien bewirken eine Erhöhung der Steifigkeit des Hitzeschildelements 26.

Die Ausgestaltung gemäß dem Ausführungsbeispiel in Figur 3 mit einer Kombination von Sattelflächenkontur im Oberflächenbereich 57A und sphärisch-konkaver Oberflächenkontur im Oberflächenbereich 57B erweist sich als besonders vorteilhaft. Durch diese Ausformung der Heißseitenoberfläche 45 ist in Richtung der Längsachse linear betrachtet eine S-förmige Kontur im ersten Wandabschnitt 47A erreicht, wohingegen der zweite Wandabschnitt 47B weitgehend planar ausgestaltet ist. Hierdurch wird beim Einsatz des Hitzeschildelements 26 in einer Brennkammer 4 eine günstige Strömungsführung des Arbeitsmediums M erzielt. Insbesondere bei einer Ringbrennkammer einer Gasturbine wird - wie in Figur 2 gezeigt - eine besonders gleichmäßige und strömungsverlustarme Umlenkung des heißen Arbeitsmediums M mit nachfolgender Einströmung in die Turbinenbeschaufelung erreicht. Durch die S-Form ist überdies eine direkte Flammeneinwirkung auf die Heißseitenoberfläche 55 vermieden. Ferner wird durch diese Oberflächenkontur ein verbessertes Überströmen des Arbeitsmediums M entlang der Heißseitenoberfläche 55 von dem ersten Wandabschnitt 47A zu dem zweiten Wandabschnitt 47B bewirkt.

Um das Hitzeschildelement 26 besonders beständig gegenüber der Beaufschlagung mit heißem Arbeitsmedium M auszugestalten, ist auf dessen Heißseite 35 eine hitzebeständige Schutzschicht 31 aufgebracht, z.B. eine keramische hochtemperaturresistente Wärmedämmschicht. Zu Kühlungszwecken ist auf der Kaltseite 33 eine Kühloberfläche 53 gebildet, die mit einem Kühlmittel K, z.B. Kühlluft, beaufschlagt wird. Somit ist beim Einsatz des Hitzeschildelements 26 zur Auskleidung einer Brennkammer 4 sowohl der Einschluss und die Strömungsführung des heißen Arbeitsmediums M als auch der Schutz anderer, möglicherweise weniger hitzebeständiger Bauteile oder Komponenten, wie z.B. der Brennkammerwand 24, vor Überhitzung oder thermischer Zerstörung gewährleistet

Mit dem Hitzeschildelement 26 der Erfindung ist es daher ein thermisch hochbelastbares und gut kühlbares Bauteil angegeben, mit dem auf einfache Weise eine flächige Auskleidung, insbesondere eine vollflächige Brennkammerauskleidung, realisierbar ist, die durch die Formversteifung besonders wenig anfällig gegenüber Verbrennungsschwingungen ist.

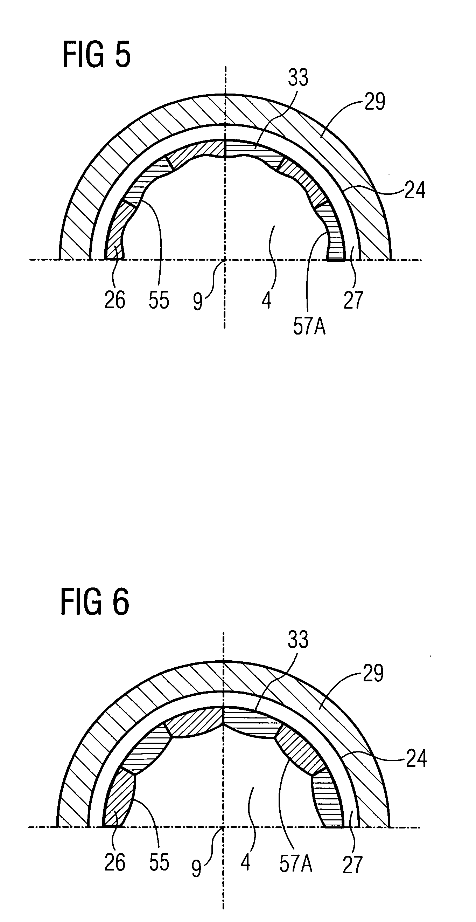

Um eine Brennkammerauskleidung einer Ringbrennkammer mit Hitzeschildelementen 26 zu Veranschaulichen, zeigen Figur 5 und Figur 6 jeweils einen Vertikalschnitt durch die obere Halbschale einer Ringbrennkammer im Bereich der Eintrittsmündung, d.h. z.B. in Anlehnung an Figur 2 brennerseitig in Richtung der Brennerachse 37 betrachtet. Die Hitzeschildelemente 26 sind innerhalb des Brennkammergehäuses 29 über den vollen Umfang um die Mittelachse 9 angeordnet, so dass eine vollflächige Brennkammerauskleidung erreicht ist. Dabei verbleibt ein Zwischenraum 27 zwischen der Kaltseite 33 der Brennkammerauskleidung und der Brennkammerwand 24, der zu Kühlungszwecken genutzt wird. Die Heißseitenoberfläche 55 der Hitzeschildelemente 26 weist einen jeweiligen Oberflächenbereich 57A auf, in dem eine gekrümmte Oberflächenkontur aufgeprägt ist. In Figur 5 ist der Oberflächenbereich 57A vom Innenraum der Brennkammer aus betrachtet konkav ausgestaltet, während in Figur 6 eine konvexe Krümmung im Oberflächenbereich 57A vorliegt. In den Beispielen der Figuren 5 und 6 ist die Brennkammerauskleidung jeweils mit im Wesentlichen baugleichen Hitzeschildelementen realisiert, was Herstellungstechnisch besonders vorteilhaft ist.

Vorteilhafterweise kann bei einer Auskleidung der Brennkammer 4 mit Hitzeschildelementen 26 eine minimale Eigenfrequenz vorgegeben werden, die von einem jeweiligen Hitzeschildelement 26 nicht unterschritten werden soll. Dann können die Abmessungen des Hitzeschildelementes 26 der Erfindung gegenüber entsprechenden Hitzeschildelementen ohne die zweidimensionale Konturgebung vergrößert werden ohne die Eigenmode nennenswert zu verändern. Damit steht für die konstruktive Auslegung der Brennkammer 4 für die Dimensionierung der Hitzeschildelemente 26 ein größerer Bereich zur Verfügung. Vor allem genügt bei einer Brennkammerauskleidung aufgrund der größeren im Hinblick auf Schwingungsanregung tolerierbaren Abmessungen eine deutlich verringerte Anzahl von Hitzeschildelementen 26, um eine vollflächige Auskleidung zu erreichen. Somit ist ein Vorteil in der Teilezahl und damit ein Kostenvorteil erreicht. In den gezeigten Ausführungsbeispielen der Figuren 5 und 6 genügen z.B. bereits 12 kreissegmentförmig angeordneten Hitzeschildelemente 26, um eine vollflächige Brennkammerauskleidung auf der Außenschale der Ringbrennkammer, einen Brennkammerliner, zu realisieren. Aufgrund der geringeren Teilezahl ist auch die Anzahl der im Allgemeinen toleranzbehaftete Verbindungsfugen zwischen den Hitzeschildelementen 26 entsprechend verringert, so dass auch Leckageverluste verringert sind.

## Patentansprüche

1. Hitzeschildelement (26), das eine Längsachse (43) und eine Querachse (45) aufweist, umfassend
a) eine Wand (47) mit einer Heißseite (35), die eine mit einem heißen Medium (M) beaufschlagbare Heißseitenoberfläche (55) aufweist, und mit einer der Heißseite (35) gegenüberliegende Kaltseite (33),
b) einen ersten Wandabschnitt (47A) und einen entlang der Längsachse (43) an den ersten Wandabschnitt (47A) angrenzenden zweiten Wandabschnitt (47B),
wobei zumindest im ersten Wandabschnitt (47A) die Heißseitenoberfläche (55) einen Oberflächenbereich (57A, 57B) mit entlang der Längsachse (43) und der Querachse (45) gekrümmter Oberflächenkontur aufweist.

2. Hitzeschildelement (26) nach Anspruch 1,
**dadurch gekennzeichnet, dass** der zweite Wandabschnitt (47B) gegenüber dem ersten Wandabschnitt (47A) in Richtung der Heißseite (35) geneigt ist.

3. Hitzeschildelement (26) nach Anspruch 1 oder 2,
**dadurch gekennzeichnet, dass** der Oberflächenbereich (57A, 57B) eine lokal konvexe und/oder lokal konkave Oberflächenkontur aufweist.

4. Hitzeschildelement (26) nach Anspruch 1, 2 oder 3,
**dadurch gekennzeichnet, dass** ein Oberflächenbereich (57A) in Form einer Sattelfläche (59) mit einem Sattelpunkt (Pₛ) ausgestaltet ist.

5. Hitzeschildelement (26) nach Anspruch 3,
**dadurch gekennzeichnet, dass** die Sattelfläche (59) in Richtung der Längsachse (43) konvex und in Richtung der Querachse (45) konkav gekrümmt ist.

6. Hitzeschildelement (26) nach einem der vorhergehenden Ansprüche,
**dadurch gekennzeichnet, dass** entlang der Längsachse (43) dem Oberflächenbereich (57A) ein zweiter Oberflächenbereich (57B) mit gekrümmter Oberflächenkontur nachgeordnet ist, wobei der Oberflächenbereich (57A) über einen Übergangsbereich (61) in den zweiten Oberflächenbereich (57B) übergeht.

7. Hitzeschildelement (26) nach Anspruch 6,
**dadurch gekennzeichnet, dass** der zweite Oberflächenbereich (57B) eine sphärische Oberflächenkontur aufweist.

8. Hitzeschildelement (26) nach einem der vorhergehenden Ansprüche,
gekennzeichnet durcheine hitzebeständige Schutzschicht (31), insbesondere eine keramische Wärmedämmschicht, auf der Heißseite (35).

9. Hitzeschildelement (26) nach einem der vorhergehenden Ansprüche,
**gekennzeichnet durch** eine mit einem Kühlmittel (K) beaufschlagbare Kühloberfläche (53) auf der Kaltseite (33).

10. Brennkammer (4) mit einer Brennkammerauskleidung umfassend Hitzeschildelemente (26) nach einem der vorhergehenden Ansprüche.

11. Brennkammer(4) nach Anspruch 10
**gekennzeichnet durch** eine Ausgestaltung als Ringbrennkammer.

12. Gasturbine (1) mit einer Brennkammer (4) nach Anspruch 10 oder 11.
